# EUROPEAN PATENT SPECIFICATION

(11) **EP 4 135 242 B1**
(45) Date of publication and mention of the grant of the patent: **28.10.2026**
(21) Application number: 20934127.0
(22) Date of filing: 28.04.2020
(51) Int. Cl.: H04L 1/22

(54) **METHOD AND APPARATUS FOR SWITCHING BETWEEN MAIN AND STANDBY LINKS, ELECTRONIC DEVICE, ROUTER, AND SWITCH**
VERFAHREN UND VORRICHTUNG ZUM UMSCHALTEN ZWISCHEN HAUPT- UND BEREITSCHAFTSVERBINDUNGEN, ELEKTRONISCHE VORRICHTUNG, ROUTER UND SCHALTER
PROCÉDÉ ET APPAREIL DE COMMUTATION ENTRE DES LIAISONS PRINCIPALE ET DE SECOURS, DISPOSITIF ÉLECTRONIQUE, ROUTEUR, ET COMMUTATEUR

(43) Date of publication of application: 15.02.2023
(73) Proprietor: Huawei Technologies Co., Ltd., Longgang District, Shenzhen, Guangdong 518129 (CN)
(72) Inventor: SUN, Hongliang, Shenzhen, Guangdong 518129 (CN); CHEN, Jingfeng, Shenzhen, Guangdong 518129 (CN); LIU, Jianqiang, Shenzhen, Guangdong 518129 (CN)
(74) Representative: Maiwald GmbH
(86) International application number: PCT/CN2020/087389
(87) International publication number: WO 2021/217394

(56) References cited:
- EP-A1- 3 537 670
- CN-A- 107 453 905
- CN-A- 107 888 345
- CN-A- 108 419 259
- CN-A- 109 428 840
- US-A1- 2002 176 432
- US-A1- 2019 173 856

## Description

### TECHNICAL FIELD

This disclosure relates to the field of Internet technologies, and in particular, to a method and an apparatus for switching between main and backup links, an electronic device, a router, a switch, and a storage medium.

### BACKGROUND

US2002/176432A1 describes a method and apparatus for providing hitless protection switching in a synchronous transmission system. It is described that a switching apparatus is arranged to receive data signals on at least two transmission paths and to output data from a selected one of said transmission paths. It is described that the apparatus is arranged to align the respective received data signals so that a selector mechanism can select between corresponding elements of the received data signals. It is described that data in respect of each frame of each data signal is stored and the selector mechanism selects between paths on a frame-by-frame basis by comparing quality information carried by the data signals.

EP 3 537 670 A1 discloses a protection switching method and system, as well as a network device, which relate to the field of communications technologies. The method includes: if n links carrying a client service are unavailable in a FlexE link group, selecting, by a first network device from other links than the n links in the FlexE link group, at least one link as a protection link; sending, by the first network device, a calendar request to a second network device over the protection link; and receiving, by the first network device, a calendar acknowledge sent by the second network device over the protection link, and switching the client service, transmitted over the n links, to the protection link for transmission. In the disclosed method, an application requirement of the FlexE for protection switching is satisfied. In addition, because a dedicated link does not need to be reserved in a FlexE link group to serve as a protection link, use of a manner of selecting the protection link as required can effectively avoid a resource waste, thereby saving a bandwidth resource.

Flex Ethernet (FlexE) is an interface technology implemented based on decoupling between a medium access control (MAC) MAC layer and a physical (PHY) layer.

In a related technology, a contradiction problem that growth of an interface rate does not match growth of a service traffic bandwidth in the flex Ethernet may be resolved in a service ring main-backup protection manner. Specifically, in a networking environment of service ring main-backup protection, a protection link (a backup link) is established for a data link (a main link) in a transmission channel. The main and backup links form ring link protection, and an electronic switch is disposed between the main and backup links. If the main link is faulty, the main link may be switched to the backup link by using the electronic switch, to transmit data based on the backup link.

However, in a process of implementing the present invention, there is at least the following disadvantage: If switching is directly performed by using the electronic switch, a link down problem may be caused.

### SUMMARY

Embodiments of this disclosure provide a method and an apparatus for switching between main and backup links, an electronic device, a router, a switch, and a storage medium.

Appended claim 1 defines a method for switching between main and backup links in Flex Ethernet. Appended claim 8 defines an apparatus for switching between main and backup links in Flex Ethernet. The invention and its scope of protection is defined by these independent claims. The following aspects and implementations of the disclosure provide examples of combinations of technical subject matters.

According to an aspect of embodiments of this disclosure, an embodiment of this disclosure provides a method for switching between main and backup links. The method includes:
extracting an overhead frame in a main link and an overhead frame in a backup link;
separately extracting attribute information of the overhead frame in the main link and attribute information of the overhead frame in the backup link, where the attribute information is used to represent quantities of times that the overhead frames appear in the main and backup links; and
performing switching between the main and backup links after aligning the attribute information of the backup link with the attribute information of the main link.

For example, when the main link is normal, the main link is linked with a next link; and when the main link is abnormal, the main link is switched to the backup link, and the backup link is linked with the next link. To "seamlessly link" the backup link with the next link without affecting normal running of the next link, in this embodiment of this application, switching is performed between the main and backup links when the attribute information of the backup link is the same as the attribute information of the main link, so that the next link is imperceptible, thereby implementing fast recovery of data transmission.

That is, in this embodiment of this disclosure, the attribute information of the overhead frame in the main link and the attribute information of the overhead frame in the backup link are first determined, and then the attribute information of the overhead frame in the backup link is aligned with the attribute information of the overhead frame in the main link, so that switching is performed between the main and backup links when the attribute information of the overhead frame in the backup link is the same as the attribute information of the overhead frame in the main link, thereby implementing "hitless switching" to reduce service impairment time of switching between the main and backup links to a greatest extent in a switching process, and implementing fast recovery of data transmission.

In some embodiments, before the extracting an overhead frame in a main link and an overhead frame in a backup link, the method further includes:
pre-configuring the overhead frames in the main and backup links, to obtain consecutive overhead frame fields.

In this embodiment of this disclosure, the consecutive overhead frame fields are obtained in a pre-configuration manner, to avoid a problem that a data field may exist between overhead frames, thereby implementing reliability of subsequent alignment.

In some embodiments, the pre-configuring the overhead frames in the main and backup links, to obtain consecutive overhead frame fields includes:
configuring consecutive OH frames, PAD frames, and AM frames; or configuring consecutive OH frames and AM frames.

In some embodiments, the method further includes:
performing time synchronization on the main and backup links.

It should be noted that the main and backup links may have same time or different time. To be based on same time in a subsequent process of aligning the attribute information of the overhead frames, in this embodiment, time synchronization is performed on the main and backup links, to improve accuracy and reliability of aligning the attribute information of the overhead frames.

In some embodiments, the aligning the attribute information of the overhead frame in the backup link with the attribute information of the overhead frame in the main link includes:
collecting a timestamp of the overhead frame in the main link, and collecting a timestamp of the overhead frame in the backup link; and
aligning the attribute information of the overhead frame in the backup link with the attribute information of the overhead frame in the main link based on the timestamp of the main link and the timestamp of the backup link.

Specifically, a flag of the overhead frame in the main link may be generated, and a flag of the overhead frame in the backup link may be generated. Timestamp sampling is performed based on the flags. For example, timestamp sampling is performed at flag appearing locations, to obtain corresponding timestamps.

It should be noted that, if the main and backup links have a same timestamp, it indicates that the attribute information of the overhead frames in the main and backup links is in an aligned state, and therefore switching can be directly performed between the main and backup links. If the main and backup links have different timestamps, it indicates that the attribute information of the overhead frames in the main and backup links is in an unaligned state. In this case, the attribute information of the overhead frames in the main and backup links is first adjusted based on the timestamps of the main and backup links, so that adjusted attribute information of the overhead frame in the backup link is the same as the attribute information of the overhead frame in the main link; and then switching is performed between the main and backup links. Specifically, the alignment may be implemented by enabling the timestamp of the backup link to follow the timestamp of the main link.

In some embodiments, the aligning the attribute information of the backup link with the attribute information of the main link based on the timestamp of the main link and the timestamp of the backup link includes:
calculating a gap between the timestamp of the main link and the timestamp of the backup link;
separately collecting OH frame information of the main link and OH frame information of the backup link; and
adjusting the OH frame information of the backup link based on the gap and the OH frame information of the main link.

In this embodiment of this disclosure, main link following processing is performed on the backup link based on the gap and the OH frame information, to fast adjust the attribute information of the overhead frame in the backup link, thereby improving adjustment efficiency.

In some embodiments, the OH frame information includes an OH frame count and an OH multiframe count.

In some embodiments, after the calculating a gap between the timestamp of the main link and the timestamp of the backup link, the method further includes:
performing time compensation on the overhead frame in the backup link based on the gap.

It should be noted that the gap may be greater than one period, or may be less than one period. If the gap is greater than one period, time compensation may be preferentially performed based on the gap. In this way, adjustment efficiency can be improved, and an adjustment resource can also be saved compared with adjustment performed based on at least one period.

In some embodiments, the method further includes:
performing skew pre-measurement on attribute information of overhead frames in to-be-bound main and backup links and the attribute information of the overhead frames in the main and backup links.

In this embodiment, it is determined, in a skew pre-measurement manner, whether to bound the to-be-bound main and backup links, to avoid a fallback due to a binding failure caused when a skew is relatively large, thereby saving a resource and improving binding efficiency and a binding success rate.

According to another aspect of embodiments of this disclosure, an embodiment of this disclosure further provides an apparatus according to claim 8.

In some embodiments, the apparatus further includes:
a pre-configuration module, configured to pre-configure the overhead frames in the main and backup links, to obtain consecutive overhead frame fields.

In some embodiments, the pre-configuration module is configured to configure consecutive OH frames, PAD frames, and AM frames; or configure consecutive OH frames and AM frames.

In some embodiments, the apparatus further includes:
a synchronization module, configured to perform time synchronization on the main and backup links.

In some embodiments, the apparatus further includes:
an alignment module, configured to: collect a timestamp of the overhead frame in the main link, and collect a timestamp of the overhead frame in the backup link; and align the attribute information of the overhead frame in the backup link with the attribute information of the overhead frame in the main link based on the timestamp of the main link and the timestamp of the backup link.

In some embodiments, the alignment module is configured to: calculate a gap between the timestamp of the main link and the timestamp of the backup link; separately collect OH frame information of the overhead frame in the main link and OH frame information of the backup link; and adjust the OH frame information of the backup link based on the gap and the OH frame information of the main link.

In some embodiments, the OH frame information includes an OH frame count and an OH multiframe count.

In some embodiments, the alignment module is configured to perform time compensation on the overhead frame in the backup link based on the gap.

In some embodiments, the apparatus further includes:
a pre-measurement module, configured to perform skew pre-measurement on attribute information of overhead frames in to-be-bound main and backup links and the attribute information of the overhead frames in the main and backup links.

According to another aspect of embodiments of this disclosure, an embodiment of this disclosure further provides an electronic device, including:
at least one processor; and
a memory communicatively connected to the at least one processor.

The memory stores instructions that can be executed by the at least one processor, and the instructions are executed by the at least one processor, to enable the at least one processor to perform the method according to any one of the foregoing embodiments.

According to another aspect of embodiments of this disclosure, an embodiment of this disclosure further provides a router, including the apparatus for switching between main and backup links according to any one of the foregoing embodiments, or the electronic device according to the foregoing embodiment.

According to another aspect of embodiments of this disclosure, an embodiment of this disclosure further provides a switch, including the apparatus for switching between main and backup links according to any one of the foregoing embodiments, or the electronic device according to the foregoing embodiment.

According to another aspect of embodiments of this disclosure, an embodiment of this disclosure further provides a computer storage medium. Computer instructions are stored in the computer storage medium, and the computer instructions are used to enable a computer to perform the method according to any one of the foregoing embodiments.

Embodiments of this disclosure provide a method and an apparatus for switching between main and backup links, an electronic device, a router, a switch, and a storage medium. The method includes: extracting the overhead frame in the main link and the overhead frame in the backup link; separately extracting the attribute information of the overhead frame in the main link and the attribute information of the overhead frame in the backup link, where the attribute information is used to represent the quantities of times that the overhead frames appear in the main and backup links; and performing switching between the main and backup links after aligning the attribute information of the backup link with the attribute information of the main link. The attribute information of the overhead frame in the main link and the attribute information of the overhead frame in the backup link are first determined, and then the attribute information of the overhead frame in the backup link is aligned with the attribute information of the overhead frame in the main link, to enable the attribute information of the overhead frame in the backup link to follow the attribute information of the overhead frame in the main link, so that switching is performed between the main and backup links when the overhead frames in the main and backup links have same attribute information, thereby implementing "hitless switching" to reduce service impairment time of switching between the main and backup links to a greatest extent in a switching process, and implementing fast recovery of data transmission.

### BRIEF DESCRIPTION OF DRAWINGS

The accompanying drawings are used to better understand embodiments of this disclosure, and do not constitute a limitation on this disclosure.
FIG. 1 is a schematic diagram of a basic structure of FlexE according to an embodiment of this disclosure;
FIG. 2 is a schematic diagram of a structure of a FlexE Mux according to an embodiment of this disclosure;
FIG. 3 is a schematic diagram of a structure of a FlexE demultiplexer (FlexE DeMux) according to an embodiment of this disclosure;
FIG. 4 is a schematic diagram of main-backup link protection according to an embodiment of this disclosure;
FIG. 5 is a schematic flowchart of a method for switching between main and backup links according to an embodiment of this disclosure;
FIG. 6 is a schematic diagram of a data structure of a main link according to an embodiment of this disclosure;
FIG. 7 is a schematic flowchart of a method for switching between main and backup links according to another embodiment of this disclosure;
FIG. 8 is a principle diagram of mapping client configuration information to a flex Ethernet group according to an embodiment of this disclosure;
FIG. 9 is a schematic diagram of a principle of overhead frame pre-configuration according to an embodiment of this disclosure;
FIG. 10 is a schematic flowchart of aligning attribute information of an overhead frame in a backup link with attribute information of an overhead frame in a main link according to an embodiment of this disclosure;
FIG. 11 is a schematic flowchart of aligning attribute information of an overhead frame in a backup link with attribute information of an overhead frame in a main link based on a timestamp of the main link and a timestamp of the backup link according to an embodiment of this disclosure;
FIG. 12 is a schematic diagram of a principle of aligning attribute information of overhead frames in main and backup links according to an embodiment of this disclosure;
FIG. 13 is a schematic diagram of a principle of switching between main and backup links according to an embodiment of this disclosure;
FIG. 14 is a schematic flowchart of a method for switching between main and backup links according to another embodiment of this disclosure;
FIG. 15 is a schematic diagram of a principle of skew pre-measurement according to an embodiment of this disclosure;
FIG. 16 is a schematic diagram of an apparatus for switching between main and backup links according to an embodiment of this disclosure;
FIG. 17 is a block diagram of an electronic device according to an embodiment of this disclosure;
FIG. 18 is a schematic diagram of implementing interaction between a terminal and an external network based on a router according to an embodiment of this disclosure; and
FIG. 19 is a schematic diagram of an application scenario of a switch according to an embodiment of this disclosure.

### DESCRIPTION OF EMBODIMENTS

Example embodiments are described in detail herein, and examples of the example embodiments are presented in the accompanying drawings. When the following description relates to the accompanying drawings, unless specified otherwise, same numbers in different accompanying drawings represent a same or similar element. Implementations described in the following example embodiments do not represent all implementations consistent with this disclosure. On the contrary, they are only examples of apparatuses and methods that are described in the appended claims in detail and that are consistent with some aspects of this disclosure.

Flex Ethernet (FlexE) is an interface technology implemented based on decoupling between a medium access control (MAC) layer and a physical (PHY) layer.

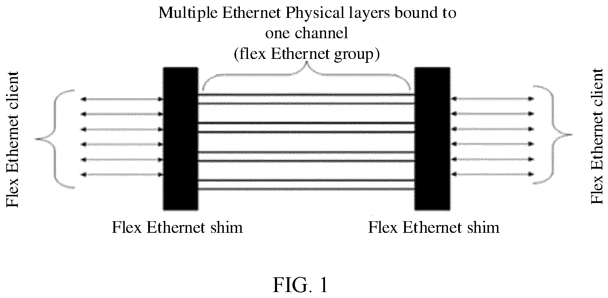

FIG. 1 is a schematic diagram of a basic structure of FlexE according to an embodiment of this disclosure.

As shown in FIG. 1, flex Ethernet clients (FlexE Clients) communicate with each other by using the FlexE, in other words, data may be transmitted between the FlexE clients by using the FlexE. In addition, the FlexE clients are connected to flex Ethernet shims (FlexE Shim), flex Ethernet physical (PHY) layers are disposed between the FlexE shims, and a plurality of PHY layers are bound together to form a flex Ethernet group (FlexE Group).

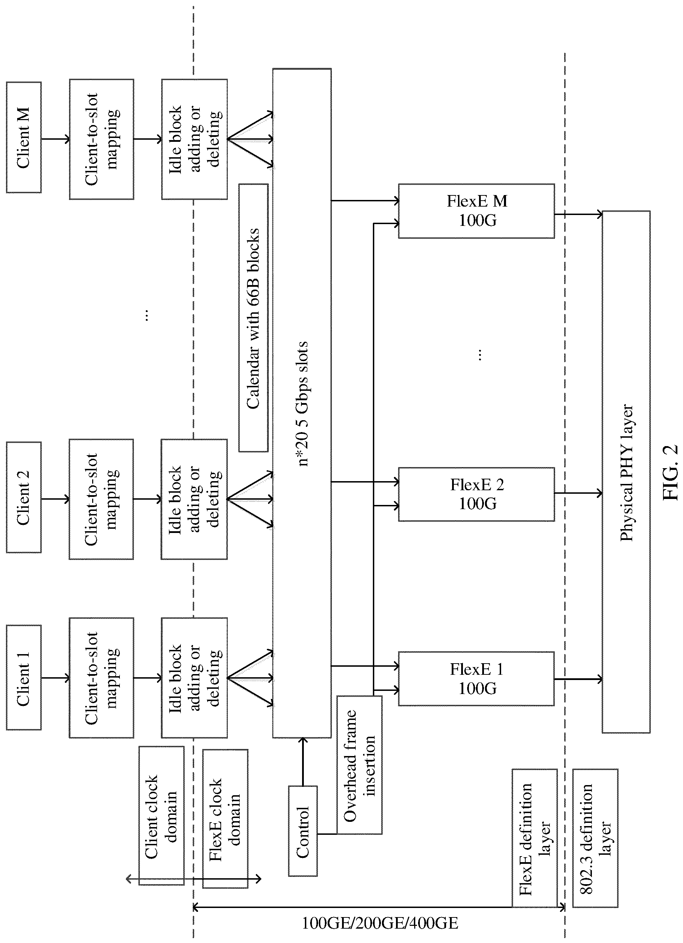

To improve data transmission efficiency of the FlexE, the FlexE is improved based on FIG. 1, to obtain a FlexE multiplexer (FlexE Mux). For a structure of the FlexE Mux, refer to FIG. 2.

In the FlexE multiplexer, based on the FlexE in FIG. 1, one or more PHY layers are bound together to form one FlexE group; and one media access control layer may be used as a FlexE client layer.

As shown in FIG. 2, a client comes from the MAC layer, and adaptation of a rate of the client to a rate of a physical PHY layer is completed through idle block adding or deleting. An adjusted client is mapped to a slot of a FlexE shim, and then an overhead frame (also referred to as an OH, or an OH overhead frame) is inserted. Finally, data is distributed to a plurality of PHY layers bound to one group.

FIG. 2 shows an example description by using 100G-bit Ethernet as an example. For a 100G-bit Ethernet PHY layer, a block data flow includes 66B blocks taking 20 slots as a period, so that the block data flow corresponds to 20 slots, and a bandwidth of each slot is about 5G.

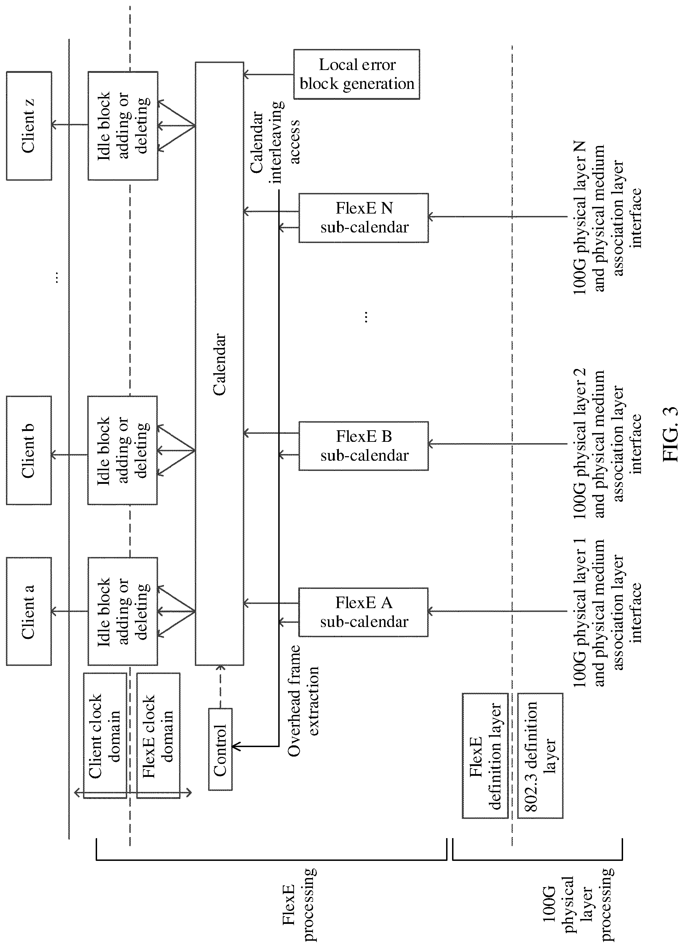

The FlexE shim can implement three common capabilities of the flex Ethernet: binding, subrate, and channelization. A specific implementation mechanism of the FlexE shim is constructing a Calendar with a size of 20*n 66B blocks, where n is a quantity of bound PHY layers, each 66B block represents one 5G slot, and 66B indicates a coding manner of block data that carries a 2-bit synchronization header (sync header) and bears 8 bytes. Every 20 66B blocks can form one sub-Calendar, that is, it can be considered that a calendar with a size of 20*n includes n sub-calendars. A client service (for example, to-be-transmitted data) corresponding to a client may be stored in blocks of a sub-calendar. For each sub-calendar, one OH frame is added every 20 slots, to store a client-to-slot mapping relationship. A client service in each sub-calendar is transmitted in a single 100G Ethernet PHY layer. On a demultiplexing side (refer to FIG. 3), n sub-calendars form one calendar with a size of 20*n, and a corresponding client service is extracted from a corresponding quantity of 66B blocks based on a client-to-slot mapping relationship stored in an overhead.

FIG. 3 is a schematic diagram of a structure of a FlexE demultiplexer (FlexE DeMux) according to an embodiment of this disclosure.

As shown in FIG. 3, a FlexE shim first extracts OH frames, and controls data in a plurality of PHY lays in a group to be aligned based on boundaries of the OH frames. Then, client information is extracted based on a slot assignment status, and a rate of a MAC layer is adapted through idle block adding or deleting.

In a data transmission process, the FlexE identifies a data boundary through OH frame locking. The OH frame locking is completed by checking OH frame header information and an OH frame spacing.

The OH frame header information includes a synchronization header "01", a control word type "0x4B", and a data type "0x5". The OH frame spacing is n fixed blocks. The OH frame header information is first identified, and then the OH frame spacing and the OH frame header information are checked. If the OH frame header information is identified to be normal and the spacing is correct for two consecutive times, the OH frame locking is normal.

An OH frame locking failure is a concept opposite to the OH frame locking. After the OH frame locking, the OH frame spacing and the OH frame header information are persistently checked. If more than five consecutive OH frames are abnormal, an OH frame locking failure occurs.

When the OH frame locking failure occurs, during client extraction, a client data flow that is output to the MAC layer stops, that is, data cannot be normally transmitted. In addition, after the OH frame locking failure occurs, OH frame locking needs to be performed. However, time for OH frame re-locking is relatively long.

To avoid a problem that data cannot be normally transmitted due to an OH frame locking failure, and time for OH frame re-locking is relatively long, a service ring main-backup protection (a networking environment) manner is used for implementation.

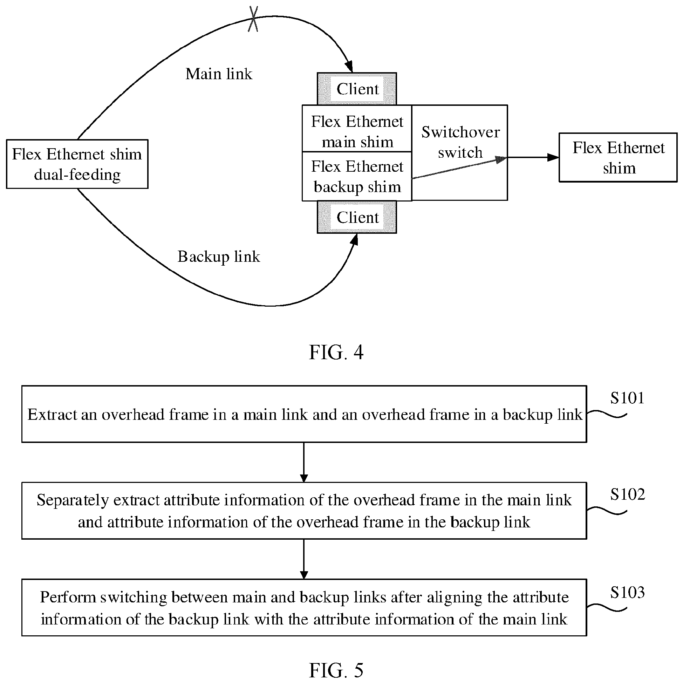

Specifically, in the networking environment, a protection link (a backup link) FlexE shim backup is established for a data link (a main link) FlexE shim main in a transmission channel, and the main and backup links form ring main-backup link protection. If the main link is faulty, the main link may be fast switched to the backup link, to implement fast data link switching, thereby avoiding the foregoing problem that data cannot be normally transmitted. For a schematic diagram of main-backup link protection, refer to FIG. 4.

In addition, with reference to FIG. 4, it can be learned that switching between main and backup links may be implemented by disposing an electronic switch.

However, because switching is performed between the main and backup links by using the electronic switch, a FlexE shim link down may be caused, and corresponding software is required to respond to physical link abnormality. Therefore, a degree of dependence on software is high, and recovery time has poor real time performance. In addition, after the FlexE shim link down, a new link needs to be established. Therefore, recovery time is long.

To resolve the foregoing problem, embodiments of this disclosure use a new method for switching between main and backup links. FIG. 5 is a schematic flowchart of a method for switching between main and backup links according to an embodiment of this disclosure.

As shown in FIG. 5, the method includes the following steps.

S101: Separately extract an overhead frame in a main link and an overhead frame in a backup link.

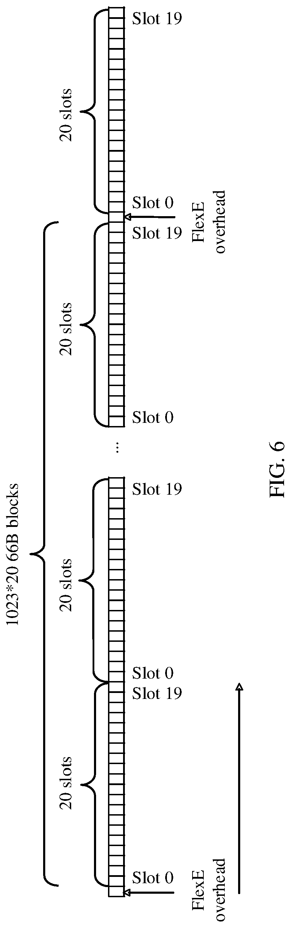

FIG. 6 is a schematic diagram of a data structure of a main link according to an embodiment of this disclosure.

As shown in FIG. 6, for a 100G-bit Ethernet PHY layer, a block data flow includes 66B blocks taking 20 slots as a period, so that the block data flow corresponds to 20 slots, and a bandwidth of each slot is about 5G. Data in each FlexE PHY layer is aligned by periodically inserting a block of a FlexE overhead frame. Assuming that there are 1023 PHY layers, specifically, one 66B overhead block FlexE overhead is inserted every 1023x20 66B blocks, so that there is one FlexE overhead in front of every 1023x20 66B blocks. The FlexE overhead is an OH frame of the FlexE.

It should be noted that this is merely an example description that the overhead frame includes an OH frame. In some embodiments, the overhead frame may alternatively include an OH frame, a padding (PAD) frame, and an alignment markers (AM) frame that are consecutively configured. In some other embodiments, the overhead frame may alternatively include an OH frame and an AM frame that are consecutively configured.

S102: Separately extract attribute information of the overhead frame in the main link and attribute information of the overhead frame in the backup link.

The attribute information is used to represent quantities of times that the overhead frames appear in the main and backup links. That is, the attribute information of the overhead frame in the main link is used to represent a quantity of times that the overhead frame appears in the main link, and the attribute information of the overhead frame in the backup link is used to represent a quantity of times that the overhead frame appears in the backup link.

An OH frame is used as an example. With reference to FIG. 6, it can be learned that the OH frame is periodically inserted in the main link. Therefore, when the OH frame is inserted in the main link for the first time, a quantity of times that the OH frame appears in the main link is 1.

S103: Perform switching between the main and backup links after aligning the attribute information of the backup link with the attribute information of the main link.

The alignment indicates that the attribute information of the backup link is consistent with the attribute information of the main link.

In this step, it is equivalent that the attribute information of the overhead frame in the backup link is enabled to follow the attribute information of the overhead frame in the main link, to implement consistency between the attribute information of the overhead frames of the two links in a manner in which the attribute information of the overhead frame in the backup link follows the attribute information of the overhead frame in the main link. Therefore, when the main link is faulty, the main link for data transmission is switched to the backup link, to ensure a FlexE shim linkup as far as possible to fast recover data transmission.

It should be noted that, when the main link is normal, the main link transmits data to a next link; and when the main link is faulty, the main link is switched to the backup link. However, because the next link is "seamlessly linked" with the main link, if the attribute information of the main link is not aligned with the attribute information of the backup link, the next link cannot be normally linked with the backup link due to inconsistency between the attribute information of the backup link and the attribute information of the main link. Consequently, the next link needs to be reconstructed, causing a reduction in data transmission efficiency. In this embodiment of this application, before switching is performed between the main and backup links, the attribute information of the backup link is first aligned with the attribute information of the main link, so that the next link is imperceptible when switching is performed between the main and backup links, to implement "seamless linking" between the backup link and the next link.

In some embodiments, the main link may be switched to the backup link based on alignment markers (AM). That is, when the overhead frames in the main and backup links have same attribute information, switching is performed between the main and backup links based on AMs carried in the overhead frames.

In this embodiment of this disclosure, the attribute information of the overhead frames in the main and backup links is aligned, so that seamless overhead frame switching and an unchanged overhead frame spacing are achieved in a process of performing switching between the main and backup links. Therefore, a FlexE shim overhead frame is normal after the switching, so that no link down occurs. In addition, according to the foregoing method, "hitless switching" (the main and backup links are in a hitless state) may be implemented based on seamless overhead frame switching, thereby greatly reducing service impairment time of switching between the main and backup links.

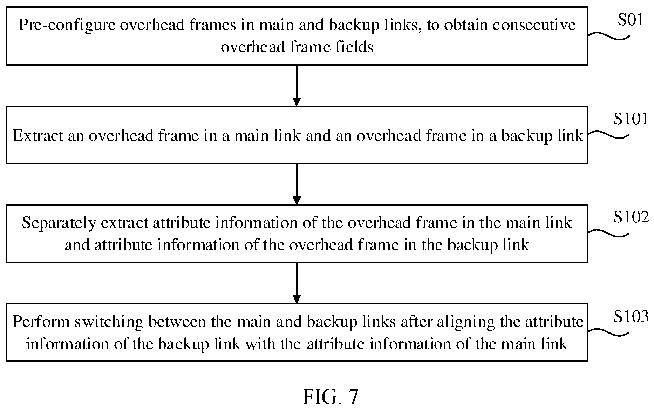

With reference to FIG. 7 (FIG. 7 is a schematic flowchart of a method for switching between main and backup links according to another embodiment of this disclosure), it can be learned that, before S101, the method may further include the following step:
S01: Pre-configure the overhead frames in the main and backup links, to obtain consecutive overhead fields.

That is, in this embodiment of this disclosure, to meet "hitless switching" between the main and backup links, the overhead frames of the main and backup links may be preferentially pre-configured, so that there are consecutive overhead frame fields at egresses of PHY layers of the main and backup links, and there is no data field in the consecutive overhead frame fields, to ensure that the FlexE outputs overhead frames at adjacent time.

Specifically, consecutive OH frames, PAD frames, and AM frames are configured, or consecutive OH frames and AM frames are configured, to obtain consecutive overhead fields. The overhead frame fields are used to represent that no data frame is inserted between the consecutively configured frames.

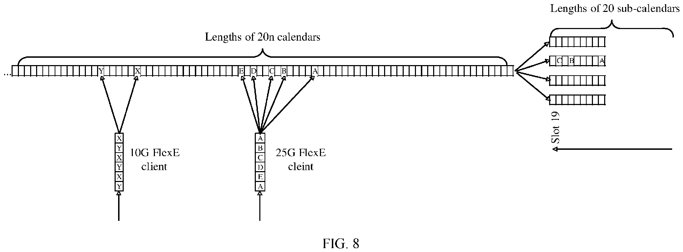

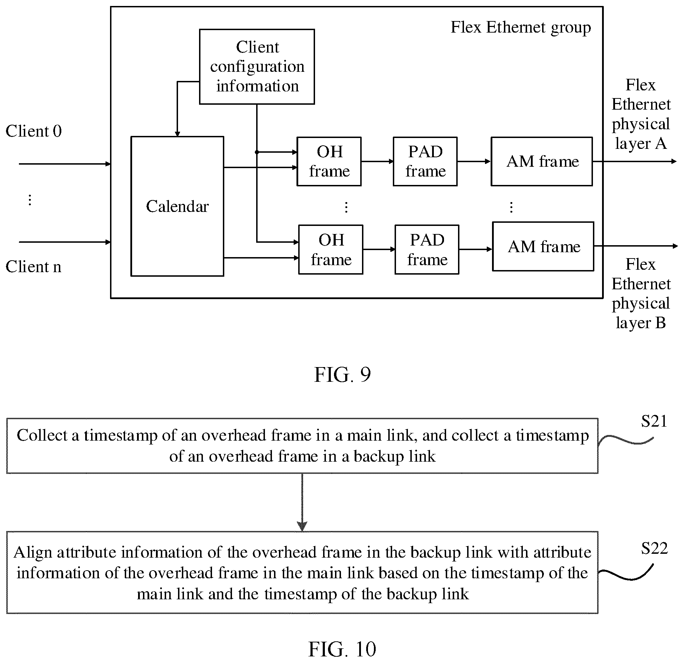

A principle of overhead frame pre-configuration in this embodiment of this disclosure is described in detail with reference to FIG. 8 and FIG. 9.

FIG. 8 is a principle diagram of mapping client configuration information to a flex Ethernet group according to an embodiment of this disclosure.

As shown in FIG. 8, a Calendar represents a diagram of a correspondence between a slot in a flex Ethernet group and a client, and a sub-calendar represents a diagram of a correspondence between a slot of a 100G-bit Ethernet PHY layer in the flex Ethernet group and a client. As shown in FIG. 8, for a 10G client, two slots may be allocated to carry data of the 10G client. For a 25G client, five slots may be allocated to carry data of the 25G client.

As shown in FIG. 9, client configuration information is obtained by using ingresses of PHY layers, and correspondences between clients (a client 0 to a client n shown in FIG. 9) and slots are mapped to a Calendar. After the mapping of the correspondences between the clients and the slots is completed, OH frames, PAD frames (if there are PAD frames), and AM frames are consecutively inserted at egresses of the PHY layers. That is, in some embodiments, OH frames, PAD frames, and AM frames may be consecutively inserted at the egresses of the PHY layers; and in some other embodiments, OH frames and AM frames may be consecutively inserted at the egresses of the PHY layers. Regardless of whether the OH frames, the PAD frames, and the AM frames are consecutively inserted or the OH frames and the AM frames are consecutively inserted, there may be consecutive overhead frame fields at the egresses of the PHY layers, and there is no data field in the consecutive overhead frame fields, to ensure that a FlexE interface outputs overhead frames at adjacent time.

It can be learned from the foregoing example that the overhead frame may include an OH frame, may include an OH frame, a PAD frame, and an AM frame, or may include an OH frame and an AM frame. In any one of the three cases, alignment between the main and backup links can be implemented based on an OH frame in the backup link and an OH frame in the main link. A specific alignment manner is described in detail below.

It should be noted that, if the overhead frame includes an OH frame, a PAD frame, and an AM frame, or if the overhead frame includes an OH frame and an AM frame, general alignment between the main and backup links may be first implemented based on an OH frame in the backup link and an OH frame in the main link, and then accurate alignment between the main and backup links may be implemented based on an AM frame in the main link and an AM frame in the backup link. A specific alignment manner is described in detail below.

In some embodiments, before S101, the method further includes the following step:
S02: Perform time synchronization on the main and backup links.

In this step, time synchronization is performed on the main and backup links, so that the attribute information of the overhead frames is subsequently aligned based on same time, to improve accuracy and reliability of aligning the attribute information of the overhead frames.

With reference to FIG. 10 (FIG. 10 is a schematic flowchart of aligning attribute information of an overhead frame in a backup link with attribute information of an overhead frame in a main link according to an embodiment of this disclosure), it can be learned that S102 includes the following steps:
S21: Collect a timestamp of the overhead frame in the main link, and collect a timestamp of the overhead frame in the backup link.

The timestamp is used to represent time of the overhead frame. That is, in this step, time of the overhead frame in the main link is determined, and time of the overhead frame in the backup link is determined.

It can be learned from the foregoing example that time synchronization may be performed on the main and backup links before the attribute information of the overhead frames is aligned. In this step, the timestamps of the overhead frames in the main and backup links may be collected based on time synchronization between the main and backup links. Therefore, it can be ensured that the timestamps of the main and backup links are collected based on the same time, to avoid a timestamp sampling skew, thereby improving accuracy and reliability of subsequently aligning the attribute information of the overhead frames in the main and backup links.

In some embodiments, flagging processing may be performed on the overhead frames, so that timestamp sampling is performed based on flags. That is, the timestamps of the main and backup links are collected based on flags of the main and backup links.

S22: Align the attribute information of the overhead frame in the backup link with the attribute information of the overhead frame in the main link based on the timestamp of the main link and the timestamp of the backup link.

If the attribute information of the overhead frames in the main and backup links is in an aligned state, the main and backup links should have a same timestamp, so that "hitless switching" can be implemented when switching is performed between the main and backup links. However, if the main and backup links have different timestamps, it indicates that the attribute information of the overhead frames in the main and backup links is in an unaligned state. In this case, if switching is performed between the main and backup links, a FlexE shim link down may be caused. Therefore, to avoid a FlexE shim link down, the attribute information of the overhead frames in the main and backup links needs to be aligned, and it may be determined, based on the timestamps of the main and backup links, whether the attribute information of the overhead frames in the main and backup links is aligned. Specifically, if the main and backup links have a same timestamp, the overhead frames in the main and backup links have same time. Because the overhead frames in the main and backup links have the same time, the main and backup links have same attribute information, and therefore the attribute information of the main and backup links is aligned. If the main and backup links have different timestamps, the overhead frames in the main and backup links have different time. Because the overhead frames in the main and backup links have different time, the main and backup links have different attribute information, and therefore the attribute information of the main and backup links is unaligned.

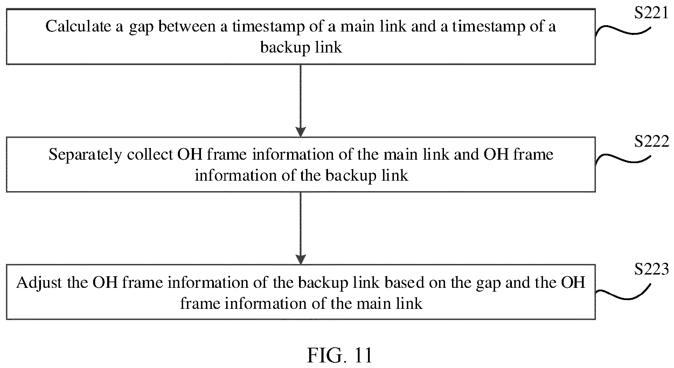

With reference to FIG. 11 (FIG. 11 is a schematic flowchart of aligning attribute information of an overhead frame in a backup link with attribute information of an overhead frame in a main link based on a timestamp of the main link and a timestamp of the backup link according to an embodiment of this disclosure), it can be learned that, in some embodiments, S22 includes the following steps:
S221: Calculate a gap between the timestamp of the main link and the timestamp of the backup link.

In this step, the gap between the timestamps of the main and backup links is calculated. Specifically, gap = timestamp of the main link - timestamp of the backup link.

S222: Separately collect the attribute information of the overhead frame in the main link and the attribute information of the overhead frame in the backup link.

S223: Adjust the attribute information of the overhead frame in the backup link based on the gap and the attribute information of the overhead frame in the main link.

In this step, the attribute information of the overhead frame in the backup link is adjusted based on determining of the gap and determining of the attribute information of the overhead frame in the main link, so that the attribute information of the overhead frame in the backup link is adjusted to be the same as the attribute information of the overhead frame in the main link, in other words, the attribute information of the overhead frames in the main and backup links is aligned in a manner in which the backup link follows the main link.

It should be noted that the gap may be greater than one period, or may be less than one period. The period is explained as follows:
For example, the overhead frame includes an OH frame, a PAD frame, and an AM frame. After the OH frame, the PAD frame, and the AM frame appear once, the OH frame, the PAD frame, and the AM frame appear again for the first time. In this case, duration between the previous appearance of the OH frame, the PAD frame, and the AM frame and the reappearance of the OH frame, the PAD frame, and the AM frame is one period. That is, one period is duration between two adjacent flags. If the gap is greater than one period, period compensation may be preferentially performed based on the gap, to save a subsequent alignment resource and improve alignment efficiency.

For example, if the gap is greater than one period and less than two periods, the overhead frame is compensated for one period; if the gap is greater than one period and less than three periods, the overhead frame is compensated for two periods; and so on. If the period is a period between adjacent overhead frames in a 100G-bit Ethernet PHY layer, time of one period is 8581965414 ns.

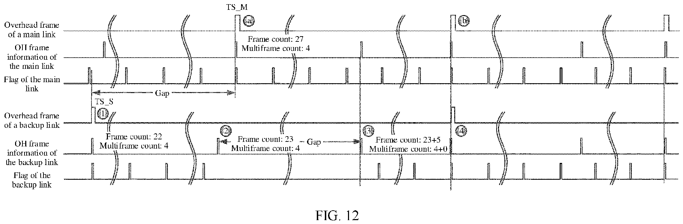

To more deeply understand alignment of attribute information of the main and backup links in this embodiment of this disclosure, a manner of aligning the attribute information of the overhead frames in the main and backup links in this embodiment of this disclosure is described in detail with reference to FIG. 12 (FIG. 12 is a schematic diagram of a principle of aligning attribute information of overhead frames in main and backup links according to an embodiment of this disclosure).

Sampling is performed on the timestamp of the overhead frame in the main link, to obtain a timestamp TS_M; and sampling is performed on the timestamp of the overhead frame in the backup link, to obtain a timestamp TS_S.

A gap between the timestamps of the main and backup links is calculated, where GAP=TS_M-TS_S.

It is determined whether the GAP is greater than one period of the overhead frame. If yes, compensation is first performed based on the GAP. A specific compensation value is determined based on a relationship between the GAP and one period. As described in the foregoing example, if the GAP is greater than one period and less than two periods, the overhead frame is compensated for one period; if the GAP is greater than one period and less than three periods, the overhead frame is compensated for two periods; and so on.

If the overhead frame includes an OH frame, the attribute information of the overhead frame is attribute information of the OH frame. The attribute information of the OH frame includes an OH frame count and an OH multiframe count, and a plurality of OH frames form one OH multiframe. The OH frame count is used to represent a quantity of times that the OH frame appears, and the OH multiframe count is used to represent a quantity of times that the OH multiframe appears.

Sampling is performed on attribute information of an OH frame in the main link, to obtain an OH frame count and an OH multiframe count of the main link. As shown in FIG. 12, the attribute information of the OH frame is collected at a location "a" in the main link, where the OH frame count is 27, and the OH multiframe count is 4.

Similarly, sampling is performed on attribute information of an OH frame in the backup link, to obtain an OH frame count and an OH multiframe count of the backup link. As shown in FIG. 12, the attribute information of the OH frame is collected at a location "1" in the backup link, where the OH frame count is 22, and the OH multiframe count is 4.

Because the OH frame count of the main link is 27 and the OH frame count of the backup link is 22, a gap between the OH frame count of the main link and the OH frame count of the backup link is 5. In this case, it can be determined that a compensation value corresponding to the OH frame count of the backup link is 5. Therefore, a value 28 can be assigned to the OH frame count of the backup link when a next OH frame of the backup link starts. A compensation value of the OH multiframe count of the backup link is 0, that is, the OH multiframe count of the backup link does not need to be adjusted.

Specifically, an OH frame at a location "2" in the backup link may reach a location "3" by being delayed by the GAP. In this case, an initial value 28 is assigned to the OH frame count, and an initial value 4 is assigned to the OH multiframe count. The attribute information of the OH frames in the main and backup links is aligned at a location "4", so that fast adjustment is completed. After the fast adjustment is completed, it can be seen, at the location "4", that the attribute information of the OH frames in the main and backup links is aligned, and an alignment effect may be checked through timestamp sampling of the main and backup links.

That is, in this embodiment of this application, if the timestamp of the main link is in front of the timestamp of the backup link, switching may be performed between the main and backup links when the timestamp of the backup link is the same as the timestamp of the main link; or if the timestamp of the backup link is in front of the timestamp of the main link, switching may be performed between the main and backup links after delaying is performed based on the gap.

In some other embodiments, if the overhead frame includes an OH frame, a PAD frame, and an AM frame, or the overhead frame includes an OH frame and an AM frame, the attribute information of the overhead frame includes attribute information of the OH frame and attribute information of the AM frame. The attribute information of the OH frame includes an OH frame count and an OH multiframe count, and a plurality of OH frames form one OH multiframe. The OH frame count is used to represent a quantity of times that the OH frame appears, and the OH multiframe count is used to represent a quantity of times that the OH multiframe appears. The attribute information of the AM frame is used to represent alignment markers of the overhead frame, to represent boundary information of the overhead frame. In addition, the aligning the overhead frame in the backup link with the overhead frame in the main link may specifically include:
aligning attribute information of an OH frame in the backup link with attribute information of an OH frame in the main link, where for an alignment method, reference may be made to the foregoing example, and details are not described herein again; and then, aligning attribute information of an AM frame in the backup link with attribute information of an AM frame in the main link, equivalent to determining a location point of switching between the main and backup links.

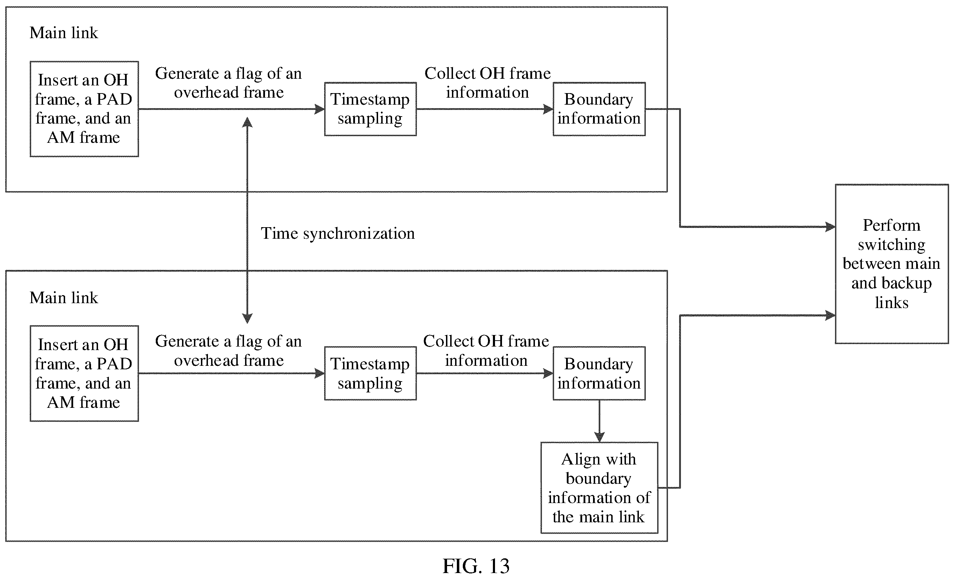

To more clearly understand the method for switching between main and backup links in this embodiment of this disclosure, a principle of switching between the main and backup links in this embodiment of this disclosure is described in detail with reference to FIG. 13 (FIG. 13 is a schematic diagram of a principle of switching between main and backup links according to an embodiment of this disclosure).

As shown in FIG. 13, the main link includes: inserting an OH frame, a PAD frame, and an AM frame (in some embodiments, an OH frame and an AM frame may be inserted); generating a flag between adjacent overhead frames; performing timestamp sampling based on the flag; collecting attribute information of the OH frame; and determining boundary information of the overhead frame in the main link based on the timestamp and the attribute information of the OH frame.

Similarly, the backup link includes: inserting an OH frame, a PAD frame, and an AM frame (in some embodiments, an OH frame and an AM frame may be inserted); generating a flag of the overhead frame; performing timestamp sampling based on the flag; collecting attribute information of the OH frame; and determining boundary information of the overhead frame based on the AM frame.

In addition, as shown in FIG. 13, time synchronization is performed before timestamp sampling is performed on the main and backup links, so that timestamp sampling is performed based on same time, to ensure comparability between the timestamps of the main and backup links, thereby implementing reliability and accuracy of subsequent alignment.

After the timestamps and the attribute information of the OH frames in the main and backup links are separately determined based on the foregoing method, the timestamp and the attribute information of the OH frame in the backup link are respectively aligned with the timestamp and the attribute information of the OH frame in the main link based on the alignment manner in the foregoing example. After the alignment, switching is performed between the main and backup links based on the boundary information of the main and backup links.

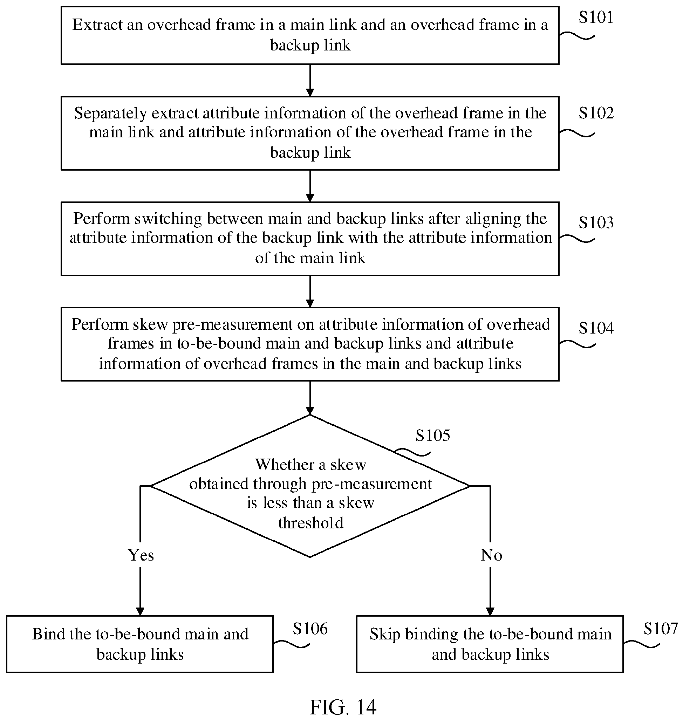

With reference to FIG. 14, in some embodiments, the method includes the following steps:
S104: Perform skew pre-measurement on attribute information of overhead frames in to-be-bound main and backup links and the attribute information of the overhead frames in the main and backup links.
S105: Determine whether a skew obtained through pre-measurement is less than a preset skew threshold; and if yes, perform S106; or if no, perform S107.
S106: Bind the to-be-bound main and backup links.
S107: Skip binding the to-be-bound main and backup links.

In this embodiment of this disclosure, main and backup links may be dynamically bound based on a FlexE group, that is, new main and backup links are added based on original main and backup links in the FlexE group.

Specifically, skew pre-measurement may be preferentially performed on attribute information of overhead frames in to-be-bound main and backup links and attribute information of overhead frames in the original main and backup links. If a skew pre-measurement result meets a preset requirement, for example, the skew is less than a preset threshold, the to-be-bound main and backup links may be bound to the FlexE group.

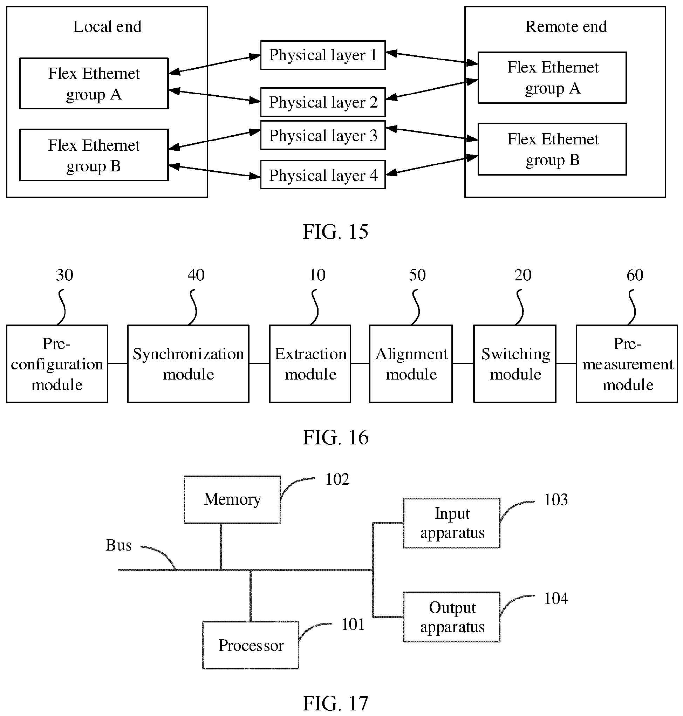

To more clearly understand a skew pre-measurement solution and effect in this embodiment of this disclosure, skew pre-measurement in this embodiment of this disclosure is described in detail with reference to FIG. 15 (FIG. 15 is a schematic diagram of a principle of skew pre-measurement according to an embodiment of this disclosure).

Two PHY layers are bound to a FlexE group A of the main link: a PHY layer 1 and a PHY layer 2. Two PHY layers are bound to a FlexE group B of the backup link: a PHY layer 3 and a PHY layer 4.

At a FlexE shim local end, the FlexE group B is aligned with the FlexE group A by using the attribute information of the overhead frames. On a receiving side at a FlexE shim remote end, a skew of the attribute information of the overhead frames is obtained through sampling, to evaluate a skew of the PHY layer 3 relative to the PHY layer 1 and a skew of the PHY layer 4 relative to the PHY layer 2.

If the skew of the PHY layer 3 relative to the PHY layer 1 is less than a preset threshold, that is, there is almost no skew of the PHY layer 3 relative to the PHY layer 1, the PHY layer 3 may be bound to the FlexE group A. Similarly, if the skew of the PHY layer 4 relative to the PHY layer 2 is less than the preset threshold, that is, there is almost no skew of the PHY layer 4 relative to the PHY layer 2, the PHY layer 4 may be bound to the FlexE group A.

On the contrary, if the skew of the PHY layer 3 relative to the PHY layer 1 is greater than the preset threshold, that is, there is a relatively large skew of the PHY layer 3 relative to the PHY layer 1, a fallback may be caused due to a binding failure, and therefore the PHY layer 3 is not bound to the FlexE group A. Similarly, if the skew of the PHY layer 4 relative to the PHY layer 2 is greater than the preset threshold, that is, there is a relatively large skew of the PHY layer 4 relative to the PHY layer 2, a fallback may be caused due to a binding failure, and therefore the PHY layer 4 is not bound to the FlexE group A.

It can be learned from the foregoing example that, before the to-be-bound links are bound, the skew between the attribute information of the overhead frames in the to-be-bound links and the bound links is predicted in advance, to avoid a fallback due to a binding failure caused by an excessively large skew in a binding process, thereby implementing technical effects of advanced prediction, resource saving, and improvement of binding efficiency and a binding success rate.

According to another aspect of embodiments of this disclosure, an embodiment of this disclosure provides an apparatus for switching between main and backup links.

FIG. 16 is a schematic diagram of an apparatus for switching between main and backup links according to an embodiment of this disclosure.

As shown in FIG. 16, the apparatus includes:
an extraction module 10, configured to extract an overhead frame in a main link and an overhead frame in a backup link, where
the extraction module 10 is further configured to separately extract attribute information of the overhead frame in the main link and attribute information of the overhead frame in the backup link, where the attribute information is used to represent quantities of times that the overhead frames appear in the main and backup links; and
a switching module 20, configured to perform switching between the main and backup links after the attribute information of the backup link is aligned with the attribute information of the main link.

With reference to FIG. 16, it can be learned that, in some embodiments, the apparatus further includes:
a pre-configuration module 30, configured to pre-configure the overhead frames in the main and backup links, to obtain consecutive overhead fields.

In some embodiments, the pre-configuration module 30 is configured to configure consecutive OH frames, PAD frames, and AM frames; or to configure consecutive OH frames and AM frames.

With reference to FIG. 16, it can be learned that, in some embodiments, the apparatus further includes:
a synchronization module 40, configured to perform time synchronization on the main and backup links.

With reference to FIG. 16, it can be learned that, in some embodiments, the apparatus further includes:
an alignment module 50, configured to: collect a timestamp of the overhead frame in the main link, and collect a timestamp of the overhead frame in the backup link; and align the attribute information of the overhead frame in the backup link with the attribute information of the overhead frame in the main link based on the timestamp of the main link and the timestamp of the backup link.

In some embodiments, the alignment module 50 is configured to: calculate a gap between the timestamp of the main link and the timestamp of the backup link; separately collect OH frame information of the main link and OH frame information of the backup link; and adjust the OH frame information of the backup link based on the gap and the OH frame information of the main link.

In some embodiments, the OH frame information includes an OH frame count and an OH multiframe count.

In some embodiments, the alignment module 50 is configured to perform time compensation on the overhead frame in the backup link based on the gap.

In some embodiments, the apparatus further includes:
a pre-measurement module 60, configured to perform skew pre-measurement on attribute information of overhead frames in to-be-bound main and backup links and the attribute information of the overhead frames in the main and backup links.

According to another aspect of embodiments of this disclosure, an embodiment of this disclosure further provides an electronic device and a computer storage medium.

FIG. 17 is a block diagram of an electronic device according to an embodiment of this disclosure.

The electronic device is intended to represent various forms of digital computers, such as a laptop computer, a desktop computer, a workbench, a personal digital assistant, a server, a blade server, a mainframe computer, and another suitable computer.

As shown in FIG. 17, the electronic device includes one or more processors 101, a memory 102, and interfaces configured to be connected to components. The interfaces include a high-speed interface and a low-speed interface. The components are interconnected by using different buses, and may be installed on a common main board or installed in another manner as required. The processor may process instructions executed in the electronic device. The instructions include instructions that are stored in the memory or that are stored on the memory to display graphical information of a GUI on an external input/output apparatus (for example, a display device coupled to an interface). In another implementation, if required, a plurality of processors and/or a plurality of buses may be used together with a plurality of memories. Similarly, a plurality of electronic devices may be connected. The devices provide some necessary operations (as, for example, a server array, a group of blade servers, or a multiprocessor system). In FIG. 17, one processor 101 is used as an example.

The memory 102 is the computer storage medium provided in this disclosure. The memory stores instructions that can be executed by at least one processor, to enable the at least one processor to perform the method for switching between main and backup links provided in this disclosure. The computer storage medium of this disclosure stores computer instructions. The computer instructions are used to enable a computer to perform the method for switching between main and backup links provided in this disclosure.

As a computer storage medium, the memory 102 may be configured to store a non-transitory software program, a non-transitory computer executable program, and a module. The processor 101 runs the non-transitory software program, the instructions, and the module that are stored in the memory 102, to execute various functional applications and data processing of a server, that is, implement the method for switching between the main and backup links in the foregoing method embodiments.

The memory 102 may include a program storage area and a data storage area. The program storage area may store an operating system and an application required by at least one function. The data storage area may store data created based on use of the electronic device, and the like. In addition, the memory 102 may include a high-speed random access memory, or may include a non-transitory memory, such as at least one magnetic disk storage device, a flash storage device, or another non-transitory solid-state storage device. In some embodiments, the memory 102 optionally includes memories remotely disposed relative to the processor 101. The remote memories may be connected to the electronic device through a network. An instance of the network includes but is not limited to the Internet, an intranet, a local area network, a blockchain network, a mobile communication network, and a combination thereof.

The electronic device may further include an input apparatus 103 and an output apparatus 104. The processor 101, the memory 102, the input apparatus 103, and the output apparatus 104 may be connected by using a bus or in another manner. In FIG. 17, a bus connection is used as an example.

A computer program (also referred to as a program, software, a software application, or code) includes machine instructions of a programmable processor, and these computer programs may be implemented by using an advanced process and/or an object-oriented programming language, and/or an assembly/machine language. As used in this specification, the terms "machine readable medium" and "computer readable medium" each are any computer program product, device, and/or apparatus (such as a magnetic disk, an optical disc, a memory, or a programmable logic device (PLD)) that is/are configured to provide machine instructions and/or data to a programmable processor, including a machine readable medium for receiving machine instructions used as machine readable signals. The term "machine readable signal" is any signal used to provide a machine instruction and/or data to the programmable processor.

According to another aspect of embodiments of this disclosure, an embodiment of this disclosure further provides a router. The router includes the apparatus for switching between main and backup links according to any one of the foregoing embodiments, or the electronic device according to the foregoing embodiment.

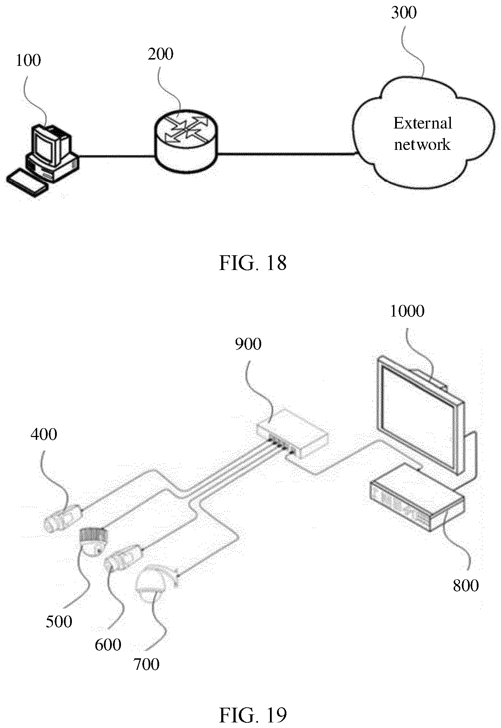

FIG. 18 is a schematic diagram of implementing interaction between a terminal 100 and an external network 300 based on a router 200 according to an embodiment of this disclosure.

The method for switching between main and backup links in embodiments of this disclosure is applicable to an application scenario shown in FIG. 18.

As shown in FIG. 18, a communication link is established between the terminal 100 and the router 200, and a communication link is established between the router 200 and the external network 300. The external network 300 transmits data to the terminal 100 by using the router 200, and similarly, the terminal 100 transmits data to the external network 300 by using the router 200.

It can be learned from the foregoing example that the router 200 includes a main link and a backup link. When the main link is faulty, data that is input by the external network 300 may be transmitted to the terminal 100 by using the backup link, and data that is input by the terminal 100 may also be transmitted to the external network 300 by using the backup link. Therefore, technical effects of reliability and timeliness of data transmission between the external network 300 and the terminal 100 are implemented.

It should be noted that the foregoing example is merely an example description of a use scenario of the router, and cannot be understood as a limitation on an application scope of the router in this embodiment of this disclosure.

According to another aspect of embodiments of this disclosure, an embodiment of this disclosure further provides a switch. The switch includes the apparatus for switching between main and backup links according to any one of the foregoing embodiments, or the electronic device according to the foregoing embodiment.

FIG. 19 is a schematic diagram of an application scenario of a switch according to an embodiment of this disclosure.

As shown in FIG. 19, an IP camera 400, a network single dome 500, an IP camera 600, and a network dome camera 700 are separately connected to a switch 900, and the switch 900 is connected to a display 1000 by using a network digital video recorder 800, so that the display 1000 displays data transmitted by one or more of the IP camera 400, the network single dome 500, the IP camera 600, and the network dome camera 700.

The method for switching between main and backup links in embodiments of this disclosure is applicable to the application scenario shown in FIG. 19.

As shown in FIG. 19, the IP camera 400 is used as an example for description as follows:
The IP camera 400 is connected to the switch 900, and transmits collected photographing data to the switch 900. The switch transmits the received photographing data to the network digital video recorder 800, so that the network digital video recorder 800 adaptively processes the photographing data and then transmits processed photographing data to the display 1000. The display 1000 displays the processed photographing data.

It can be learned from the foregoing example that the switch 900 includes a main link and a backup link. When the main link is faulty, the photographing data that is input by the IP camera 400 may be transmitted to the network digital video recorder 800 by using the backup link, thereby implementing technical effects of reliability and timeliness of photographing data transmission.

Similarly, it should be noted that the foregoing example is merely an example description of a use scenario of the switch, and cannot be understood as a limitation on an application scope of the switch in this embodiment of this disclosure.

It should be understood that step re-sorting, adding, or deleting may be performed by using the foregoing various forms of procedures. For example, the steps described in this disclosure may be performed in parallel, may be sequentially performed, or may be performed in a different order, provided that an expected result of the technical solutions of this disclosure can be implemented. This is not limited herein.

The foregoing specific implementations do not constitute a limitation on the protection scope of this disclosure. A person skilled in the art should understand that various modifications, combinations, sub-combinations, and substitutions may be performed based on design requirements and other factors. The invention is defined by the appended claims.

## Claims

1. A method performed by an apparatus for switching between main and backup links in Flex Ethernet, the method comprising:
extracting (S101) an overhead frame in a main link and an overhead frame in a backup link;
separately (S102) extracting attribute information of the overhead frame in the main link and attribute information of the overhead frame in the backup link, wherein the attribute information is used to represent quantities of times that the overhead frames appear in the main and backup links; and
performing (S103) switching between the main and backup links after aligning the attribute information of the backup link with the attribute information of the main link, and switching is performed between the main link and the backup link when the attribute information of the backup link is the same as the attribute information of the main link.

2. The method according to claim 1, wherein before the extracting an overhead frame in a main link and an overhead frame in a backup link, the method further comprises:
pre-configuring the overhead frames in the main and backup links, to obtain consecutive overhead frame fields.

3. The method according to claim 2, wherein the pre-configuring the overhead frames in the main and backup links comprises:
configuring consecutive overhead frames, padding, PAD, frames, and alignment marker, AM, frames; or
configuring consecutive overhead frames and AM frames.

4. The method according to claim 3, wherein the method further comprises:
performing time synchronization on the main and backup links.

5. The method according to claim 4, wherein the aligning the attribute information of the backup link with the attribute information of the main link comprises:
collecting a timestamp of the overhead frame in the main link, and collecting a timestamp of the overhead frame in the backup link; and
aligning the attribute information of the backup link with the attribute information of the main link based on the timestamp of the main link and the timestamp of the backup link.

6. The method according to claim 5, wherein the aligning the attribute information of the backup link with the attribute information of the main link based on the timestamp of the main link and the timestamp of the backup link comprises:
calculating a gap between the timestamp of the main link and the timestamp of the backup link;
separately collecting overhead frame information of the main link and overhead frame information of the backup link; and
adjusting the overhead frame information of the backup link based on the gap and the overhead frame information of the main link; and
wherein the OH overhead frame information comprises an OH overhead frame count and an OH overhead multiframe count.

7. The method according to claim 6, wherein after the calculating a gap between the timestamp of the main link and the timestamp of the backup link, the method further comprises:
performing time compensation on the overhead frame in the backup link based on the gap.

8. An apparatus for switching between main and backup links in Flex Ethernet, wherein the apparatus comprises:
an extraction module (10), configured to extract an overhead frame in a main link and an overhead frame in a backup link, wherein
the extraction module (10) is further configured to separately extract attribute information of the overhead frame in the main link and attribute information of the overhead frame in the backup link, wherein the attribute information is used to represent quantities of times that the overhead frames appear in the main and backup links; and
a switching module (20), , configured to perform switching between the main and backup links after aligning the attribute information of the backup link with the attribute information of the main link, and switching is performed between the main link and the backup link when the attribute information of the backup link is the same as the attribute information of the main link.

9. The apparatus according to claim 8, wherein the apparatus further comprises:
a pre-configuration module (30), configured to pre-configure the overhead frames in the main and backup links, to obtain consecutive overhead frame fields.

10. The apparatus according to claim 9, wherein the pre-configuration module (30) is specifically configured to:
configure consecutive overhead frames, padding, PAD, frames, and alignment marker, AM, frames; or to configure consecutive overhead frames and AM frames.

11. The apparatus according to claim 10, wherein the apparatus further comprises:
a synchronization module (40), configured to perform time synchronization on the main and backup links.

12. The apparatus according to claim 11, wherein the apparatus further comprises:
an alignment module (50), configured to: collect a timestamp of the overhead frame in the main link, and collect a timestamp of the overhead frame in the backup link; and align the attribute information of the backup link with the attribute information of the main link based on the timestamp of the main link and the timestamp of the backup link.

13. The apparatus according to claim 12, wherein the alignment module (50) is configured to: calculate a gap between the timestamp of the main link and the timestamp of the backup link; separately collect overhead frame information of the main link and overhead frame information of the backup link; and adjust the overhead frame information of the backup link based on the gap and the overhead frame information of the main link, and
wherein the OH overhead frame information comprises an OH overhead frame count and an OH overhead multiframe count.

14. The apparatus according to claim 13, wherein the alignment module module (50) is configured to perform time compensation on the overhead frame in the backup link based on the gap.

## Patentansprüche

1. Verfahren, das durch eine Einrichtung durchgeführt wird, zum Umschalten zwischen einer Hauptverbindung und einer Sicherungsverbindung im Flex Ethernet, wobei das Verfahren Folgendes umfasst:
Extrahieren (S101) eines Overhead-Rahmens in einer Hauptverbindung und eines Overhead-Rahmens in einer Sicherungsverbindung;
separates (S102) Extrahieren von Attributinformationen des Overhead-Rahmens in der Hauptverbindung und Attributinformationen des Overhead-Rahmens in der Sicherungsverbindung, wobei die Attributinformationen verwendet werden, um die Häufigkeit des Auftretens der Overhead-Rahmen in der Hauptverbindung und der Sicherungsverbindung darzustellen; und
Durchführen (S103) des Umschaltens zwischen der Hauptverbindung und der Sicherungsverbindung nach dem Ausrichten der Attributinformationen der Sicherungsverbindung mit den Attributinformationen der Hauptverbindung, wobei das Umschalten zwischen der Hauptverbindung und der Sicherungsverbindung durchgeführt wird, wenn die Attributinformationen der Sicherungsverbindung dieselben wie die Attributinformationen der Hauptverbindung sind.

2. Verfahren nach Anspruch 1, wobei das Verfahren vor dem Extrahieren eines Overhead-Rahmens in einer Hauptverbindung und eines Overhead-Rahmens in einer Sicherungsverbindung ferner Folgendes umfasst:
Vorkonfigurieren der Overhead-Rahmen in der Hauptverbindung und der Sicherungsverbindung, um aufeinanderfolgende Overhead-Rahmenfelder zu erlangen.

3. Verfahren nach Anspruch 2, wobei das Vorkonfigurieren der Overhead-Rahmen in der Hauptverbindung und der Sicherungsverbindung Folgendes umfasst:
Konfigurieren aufeinanderfolgender Overhead-Rahmen, Padding-Rahmen, PAD-Rahmen, und Ausrichtungsmarkierungsrahmen, AM-Rahmen; oder
Konfigurieren aufeinanderfolgender Overhead-Rahmen und von AM-Rahmen.

4. Verfahren nach Anspruch 3, wobei das Verfahren ferner Folgendes umfasst:
Durchführen einer Zeitsynchronisation an der Hauptverbindung und der Sicherungsverbindung.

5. Verfahren nach Anspruch 4, wobei das Ausrichten der Attributinformationen der Sicherungsverbindung mit den Attributinformationen der Hauptverbindung Folgendes umfasst:
Sammeln eines Zeitstempels des Overhead-Rahmens in der Hauptverbindung und Sammeln eines Zeitstempels des Overhead-Rahmens in der Backup-Verbindung; und
Ausrichten der Attributinformationen der Sicherungsverbindung mit den Attributinformationen der Hauptverbindung basierend auf dem Zeitstempel der Hauptverbindung und dem Zeitstempel der Sicherungsverbindung.

6. Verfahren nach Anspruch 5, wobei das Ausrichten der Attributinformationen der Sicherungsverbindung mit den Attributinformationen der Hauptverbindung basierend auf dem Zeitstempel der Hauptverbindung und dem Zeitstempel der Sicherungsverbindung Folgendes umfasst:
Berechnen einer Lücke zwischen dem Zeitstempel der Hauptverbindung und dem Zeitstempel der Sicherungsverbindung;
separates Sammeln von Overhead-Rahmeninformationen der Hauptverbindung und Overhead-Rahmeninformationen der Sicherungsverbindung; und
Anpassen der Overhead-Rahmeninformationen der Sicherungsverbindung basierend auf der Lücke und den Overhead-Rahmeninformationen der Hauptverbindung; und
wobei die OH-Overhead-Rahmeninformationen eine OH-Overhead-Rahmenanzahl und eine OH-Overhead-Mehrfachrahmenanzahl umfassen.

7. Verfahren nach Anspruch 6, wobei das Verfahren nach dem Berechnen einer Lücke zwischen dem Zeitstempel der Hauptverbindung und dem Zeitstempel der Sicherungsverbindung ferner Folgendes umfasst:
Durchführen eines Zeitausgleichs an dem Overhead-Rahmen in der Sicherungsverbindung basierend auf der Lücke.

8. Einrichtung zum Umschalten zwischen einer Hauptverbindung und einer Sicherungsverbindung im Flex Ethernet, wobei die Einrichtung Folgendes umfasst:
ein Extraktionsmodul (10), das dazu konfiguriert ist, einen Overhead-Rahmen in einer Hauptverbindung und einen Overhead-Rahmen in einer Sicherungsverbindung zu extrahieren, wobei
das Extraktionsmodul (10) ferner dazu konfiguriert ist, Attributinformationen des Overhead-Rahmens in der Hauptverbindung und Attributinformationen des Overhead-Rahmens in der Sicherungsverbindung separat zu extrahieren, wobei die Attributinformationen verwendet werden, um die Häufigkeit des Auftretens der Overhead-Rahmens in der Hauptverbindung und der Sicherungsverbindung darzustellen; und
ein Umschaltmodul (20), das dazu konfiguriert ist, das Umschalten zwischen der Hauptverbindung und der Sicherungsverbindung nach dem Ausrichten der Attributinformationen der Sicherungsverbindung mit den Attributinformationen der Hauptverbindung durchzuführen, wobei das Umschalten zwischen der Hauptverbindung und der Sicherungsverbindung durchgeführt wird, wenn die Attributinformationen der Sicherungsverbindung dieselben wie die Attributinformationen der Hauptverbindung sind.

9. Vorrichtung nach Anspruch 8, wobei die Vorrichtung ferner Folgendes umfasst:
ein Vorkonfigurationsmodul (30), das dazu konfiguriert ist, die Overhead-Rahmen in der Hauptverbindung und der Sicherungsverbindung vorzukonfigurieren, um aufeinanderfolgende Overhead-Rahmenfelder zu erlangen.

10. Einrichtung nach Anspruch 9, wobei das Vorkonfigurationsmodul (30) insbesondere dazu konfiguriert ist:
aufeinanderfolgende Overhead-Rahmen, Padding-Rahmen, PAD-Rahmen, und Ausrichtungsmarkierungsrahmen, AM-Rahmen, zu konfigurieren; oder
aufeinanderfolgende Overhead-Rahmen und AM-Rahmen zu konfigurieren.

11. Einrichtung nach Anspruch 10, wobei die Einrichtung ferner Folgendes umfasst:
ein Synchronisationsmodul (40), das dazu konfiguriert ist, eine Zeitsynchronisation an der Hauptverbindung und der Sicherungsverbindung durchzuführen.

12. Einrichtung nach Anspruch 11, wobei die Einrichtung ferner Folgendes umfasst:
ein Ausrichtungsmodul (50), das dazu konfiguriert ist: einen Zeitstempel des Overhead-Rahmens in der Hauptverbindung zu sammeln und einen Zeitstempel des Overhead-Rahmens in der Sicherungsverbindung zu sammeln; und die Attributinformationen der Sicherungsverbindung mit den Attributinformationen der Hauptverbindung basierend auf dem Zeitstempel der Hauptverbindung und dem Zeitstempel der Sicherungsverbindung auszurichten.

13. Einrichtung nach Anspruch 12, wobei das Ausrichtungsmodul (50) dazu konfiguriert ist: eine Lücke zwischen dem Zeitstempel der Hauptverbindung und dem Zeitstempel der Sicherungsverbindung zu berechnen; Overhead-Rahmeninformationen der Hauptverbindung und Overhead-Rahmeninformationen der Sicherungsverbindung separat zu sammeln; und die Overhead-Rahmeninformationen der Sicherungsverbindung basierend auf der Lücke und den Overhead-Rahmeninformationen der Hauptverbindung anzupassen, und
wobei die OH-Overhead-Rahmeninformationen eine OH-Overhead-Rahmenanzahl und eine OH-Overhead-Mehrfachrahmenanzahl umfassen.

14. Einrichtung nach Anspruch 13, wobei das Ausrichtungsmodul (50) dazu konfiguriert ist, einen Zeitausgleich an dem Overhead-Rahmen in der Sicherungsverbindung basierend auf der Lücke durchzuführen.

## Revendications

1. Procédé réalisé par un appareil de commutation entre des liaisons principales et de secours dans Flex Ethernet, le procédé comprenant :
l'extraction (S101) d'une trame de supervision dans une liaison principale et d'une trame de supervision dans une liaison de secours ;
l'extraction séparée (S102) des informations d'attribut de la trame de supervision dans la liaison principale et des informations d'attribut de la trame de supervision dans la liaison de secours, dans lequel les informations d'attribut sont utilisées pour représenter le nombre de fois où les trames de supervision apparaissent dans les liaisons principale et de secours ; et
la réalisation (S103) de la commutation entre les liaisons principale et de secours après avoir aligné les informations d'attribut de la liaison de secours avec les informations d'attribut de la liaison principale, et la commutation est réalisée entre la liaison principale et la liaison de secours lorsque les informations d'attribut de la liaison de secours sont identiques aux informations d'attribut de la liaison principale.

2. Procédé selon la revendication 1, dans lequel, avant l'extraction d'une trame de supervision dans une liaison principale et d'une trame de supervision dans une liaison de secours, le procédé comprend en outre :
la préconfiguration des trames de supervision dans les liaisons principale et de secours, afin d'obtenir des champs de trame de supervision consécutives.

3. Procédé selon la revendication 2, dans lequel la préconfiguration des trames de supervision dans les liaisons principale et de secours comprend :
la configuration des trames de supervision consécutives, des trames de remplissage, PAD, et des trames de marqueur d'alignement, AM ; ou
la configuration des trames de supervision consécutives et des trames AM.

4. Procédé selon la revendication 3, dans lequel le procédé comprend en outre :
la réalisation de la synchronisation horaire sur les liaisons principale et de secours.

5. Procédé selon la revendication 4, dans lequel l'alignement des informations d'attribut de la liaison de secours avec les informations d'attribut de la liaison principale comprend :
la collecte d'un horodatage de la trame de supervision dans la liaison principale, et la collecte d'un horodatage de la trame de supervision dans la liaison de secours ; et
l'alignement des informations d'attribut de la liaison de secours avec les informations d'attribut de la liaison principale sur la base de l'horodatage de la liaison principale et de l'horodatage de la liaison de secours.

6. Procédé selon la revendication 5, dans lequel l'alignement des informations d'attributs de la liaison de secours avec les informations d'attributs de la liaison principale sur la base de l'horodatage de la liaison principale et l'horodatage de la liaison de secours comprend :
le calcul de l'écart entre l'horodatage de la liaison principale et l'horodatage de la liaison de secours;
la collecte séparée des informations de trame de supervision de la liaison principale et des informations de trame de supervision de la liaison de secours ; et
le réglage des informations de trame de supervision de la liaison de secours sur la base de l'écart et des informations de trame de supervision de la liaison principale ; et
dans lequel les informations sur les trames de supervision OH comprennent un nombre de trames de supervision OH et un nombre de multitrames de supervision OH.

7. Procédé selon la revendication 6, dans lequel, après le calcul de l'écart entre l'horodatage de la liaison principale et l'horodatage de la liaison de secours, le procédé comprend en outre : la réalisation d'une compensation temporelle sur la trame de supervision dans la liaison de secours sur la base de l'écart.

8. Appareil de commutation entre des liaisons principale et de secours dans Flex Ethernet, dans lequel l'appareil comprend :
un module d'extraction (10), configuré pour extraire une trame de supervision dans une liaison principale et une trame de supervision dans une liaison de secours, dans lequel
le module d'extraction (10) est en outre configuré pour extraire séparément les informations d'attribut de la trame de supervision dans la liaison principale et des informations d'attribut de la trame de supervision dans la liaison de secours, dans lequel les informations d'attribut sont utilisées pour représenter le nombre de fois où les trames de supervision apparaissent dans les liaisons principale et de secours ; et
un module de commutation (20), configuré pour réaliser la commutation entre les liaisons principale et de secours après avoir aligné les informations d'attribut de la liaison de secours avec les informations d'attribut de la liaison principale, et la commutation est réalisée entre la liaison principale et la liaison de secours lorsque les informations d'attribut de la liaison de secours sont identiques aux informations d'attribut de la liaison principale.

9. Appareil selon la revendication 8, dans lequel l'appareil comprend en outre :
un module de préconfiguration (30), configuré pour préconfigurer les trames de supervision dans les liaisons principale et de secours, afin d'obtenir des champs de trame de supervision consécutives.

10. Appareil selon la revendication 9, dans lequel le module de préconfiguration (30) est spécifiquement configuré pour :
configurer les trames de supervision consécutives, les trames de remplissage, PAD, et les trames de marqueur d'alignement, AM ; ou
pour configurer les cadres de supervision consécutives et les trames AM.

11. Appareil selon la revendication 10, dans lequel l'appareil comprend en outre :
un module de synchronisation (40), configuré pour réaliser la synchronisation temporelle sur les liaisons principale et de secours.

12. Appareil selon la revendication 11, dans lequel l'appareil comprend en outre :
un module d'alignement (50), configuré pour : collecter un horodatage de la trame de supervision dans la liaison principale et collecter un horodatage de la trame de supervision dans la liaison de secours ; et aligner les informations d'attribut de la liaison de secours avec les informations d'attribut de la liaison principale sur la base de l'horodatage de la liaison principale et de l'horodatage de la liaison de secours.

13. Appareil selon la revendication 12, dans lequel le module d'alignement (50) est configuré pour : calculer un écart entre l'horodatage de la liaison principale et l'horodatage de la liaison de secours ; collecter séparément les informations de trame de supervision de la liaison principale et les informations de trame de supervision de la liaison de secours ; et ajuster les informations de trame de supervision de la liaison de secours sur la base de l'écart et des informations de trame de supervision de la liaison principale, et
dans lequel les informations sur les trames de supervision OH comprennent un nombre de trames de supervision OH et un nombre de multitrames de supervision OH.

14. Appareil selon la revendication 13, dans lequel le module d'alignement (50) est configuré pour réaliser une compensation temporelle sur la trame de supervision dans la liaison de secours sur la base de l'écart.
